# EUROPÄISCHE PATENTANMELDUNG

(11) **EP 3 769 938 A1**
(43) Veröffentlichungstag der Anmeldung: **27.01.2021**
(21) Anmeldenummer: 20187252.0
(22) Anmeldetag: 22.07.2020
(51) Int. Cl.: B29C 64/135, B29C 64/241, B29C 64/245

(54) **VERFAHREN UND VORRICHTUNG ZUM ADDITIVEN HERSTELLEN VON KURZFASERVERBUNDWERKSTOFF-OBJEKTEN UND KURZFASERVERBUNDWERKSTOFF-OBJEKT**

(30) Priorität: 23.07.2019 DE 102019119885
(71) Anmelder: Universität Stuttgart, 70174 Stuttgart (DE)
(72) Erfinder: SCHLOTTHAUER, Tristan, 70569 Stuttgart (DE)
(74) Vertreter: Ege Lee & Partner Patentanwälte PartGmbB

(57) **Zusammenfassung**

Verfahren zum additiven Herstellen von Kurzfaserverbundwerkstoff-Objekten (122), wobei schichtweise innerhalb eines fluiden Matrixwerkstoffs zunächst ungerichtet vorliegende Kurzfasern (146) orientiert werden, die Kurzfasern (146) kompaktiert werden und der Matrixwerkstoff konsolidiert wird, Vorrichtung (100) zum Durchführen eines derartigen Verfahrens, wobei die Vorrichtung (100) wenigstens eine Bauplattform (104) und wenigstens eine Arbeitswanne (118) aufweist, wobei die wenigstens eine Bauplattform (104) und die wenigstens eine Arbeitswanne (118) um eine Drehachse (114) relativ zueinander drehbar und entlang der Drehachse (114) relativ zueinander verlagerbar sind, und Kurzfaserverbundwerkstoff-Objekt (122), wobei das Kurzfaserverbundwerkstoff-Objekt (122) gemäß einem derartigen Verfahren und/oder mithilfe einer derartigen Vorrichtung (100) hergestellt ist.

## Beschreibung

Die Erfindung betrifft ein Verfahren zum additiven Herstellen von Kurzfaserverbundwerkstoff-Objekten. Außerdem betrifft die Erfindung eine Vorrichtung zum additiven Herstellen von Kurzfaserverbundwerkstoff-Objekten. Außerdem betrifft die Erfindung ein Kurzfaserverbundwerkstoff-Objekt.

Aus dem Dokument US 2017/0136699 A1 sind ein Verfahren und eine Vorrichtung bekannt zum Herstellen eines Verbundteils, um zu ermöglichen, dass Verbundteile mit präziser Kontrolle einer Orientierung und räumlichen Verteilung von Verstärkungs- oder anderen Partikeln in einem Matrixmaterial aufgebaut werden. Das Verfahren und die Vorrichtung verwenden Magnetfelder, die während verschiedener additiver Herstellungsprozesse angelegt werden, um komplexe Partikelorientierungen innerhalb jeder Schicht des Teils zu erreichen.

Aus dem Dokument US 2008/0156429 A1 ist ein Verfahren bekannt zur Herstellung eines Teils, wobei das Verfahren umfasst: (a) Bereitstellen einer ungehärteten oberen Schicht auf einem Teil, einem Substrat, einem Werkstück, einer Trägerplattform oder einer Basisschicht, wobei die ungehärtete obere Schicht Harz umfasst und auch Fasern, Partikel, Pulver und/oder elektronische Vorrichtungen umfasst; (b) optionales Bereitstellen einer neuen ungehärteten oberen Schicht auf der in Schritt (a) bereitgestellten ungehärteten oberen Schicht, wodurch die in Schritt (a) bereitgestellte ungehärtete obere Schicht zu einer ungehärteten unteren Schicht wird, und wobei die neue ungehärtete obere Schicht Harz umfasst und auch Fasern, Partikel, Pulver und/oder elektronische Vorrichtungen umfasst, (c) Härten der ungehärteten oberen Schicht und/oder der ungehärteten unteren Schicht nach Schritt (b) unter Verwendung eines Elektronenstrahls; (d) nach Schritt (c), Bereitstellen einer neuen ungehärteten oberen Schicht auf der gehärteten oder ungehärteten oberen Schicht, wodurch die gehärtete oder ungehärtete obere Schicht zu einer gehärteten oder ungehärteten unteren Schicht wird, und wobei die neue ungehärtete obere Schicht Harz umfasst und auch Fasern, Partikel, Pulver und/oder elektronische Vorrichtungen umfasst; (e) gegebenenfalls Schneiden der aus Schritt (d) resultierenden unteren Schicht, wenn die untere Schicht ungehärtet ist, um eine gehärtete untere Schicht zu erhalten; (f) nach Schritt (e) gegebenenfalls Bereitstellen einer neuen ungehärteten oberen Schicht auf der in Schritt (d) bereitgestellten ungehärteten oberen Schicht, wodurch die in Schritt (d) bereitgestellte ungehärtete obere Schicht zu einer ungehärteten unteren Schicht wird, und wobei die neue ungehärtete obere Schicht Harz und auch Fasern, Teilchen, Pulver und/oder elektronische Bauelemente umfasst; (g) nach Schritt (f) Härten der ungehärteten oberen Schicht und/oder der ungehärteten unteren Schicht(en) nach Schritt (f) unter Verwendung eines Elektronenstrahls; und (h) gegebenenfalls mehrmaliges Wiederholen der Schritte (d) bis (g), um eine gewünschte Anzahl von gehärteten Schichten zu bilden.

Aus dem Dokument US 9,827,713 B1 ist ein 3D-Druckverfahren bekannt zum Bilden eines 3D-Objekts, indem abwechselnd Schichten aus einem flüssigen Harz und einem Feststoff gebildet werden. Beispielsweise kann ein 3D-Drucker beim Drucken eines 3D-Objekts eine Schicht aus flüssigem Harz zumindest teilweise aushärten, und bevor die Aushärtung des Harzes abgeschlossen ist, taucht er das halb ausgehärtete Harz in einen Behälter mit Graphenpulver, um ein besonders haltbares 3D-Objekt zu erzeugen. Als weiteres Beispiel könnte jede halb gehärtete Harzschicht in einen Behälter mit Glasfaser gepresst werden, sodass die Glasfaser mit dem halb gehärteten Harz verbunden wird. Das Harz kann dann zu Ende ausgehärtet werden, bevor die nächste Harzschicht gebildet wird. In anderen Ausführungsformen könnte dieses Verfahren zum Einbetten von Sensoren in gedruckte 3D-Objekte verwendet werden.

Der Erfindung liegt die Aufgabe zugrunde, ein eingangs genanntes Verfahren zu verbessern. Außerdem liegt der Erfindung die Aufgabe zugrunde, eine eingangs genannte Vorrichtung strukturell und/oder funktionell zu verbessern. Außerdem liegt der Erfindung die Aufgabe zugrunde, ein eingangs genanntes Kurzfaserverbundwerkstoff-Objekt strukturell und/oder funktionell zu verbessern.

Die Aufgabe wird gelöst mit einem Verfahren mit den Merkmalen des Anspruchs 1. Außerdem wird die Aufgabe gelöst mit einer Vorrichtung mit den Merkmalen des Anspruchs 9. Außerdem wird die Aufgabe gelöst mit einem Kurzfaserverbundwerkstoff-Objekt mit den Merkmalen des Anspruchs 15. Vorteilhafte Ausführungen und/oder Weiterbildungen sind Gegenstand der Unteransprüche.

Das Verfahren kann ein 3D-Druck-Verfahren sein. Das Verfahren kann ein generatives Verfahren sein. Das Verfahren kann ein kombiniertes Verfahren sein. Das Verfahren kann ein Hybridverfahren sein. Die Kurzfasern können in einem ersten Schritt orientiert werden. Die Kurzfasern können in einem zweiten Schritt kompaktiert werden. Der Matrixwerkstoff kann in einem dritten Schritt konsolidiert werden. Zum Aufbauen einer Schicht können jeweils der erste Schritt, der zweite Schritt und der dritte Schritt durchgeführt werden. Kurzfaserverbundwerkstoff-Objekte können Schicht für Schicht aufgebaut werden. Ein Schichtaufbau kann von oben nach unten erfolgen. Ein Schichtaufbau kann geodätisch von oben nach unten erfolgen. Ein Schichtaufbau kann von unten nach oben erfolgen. Ein Schichtaufbau kann geodätisch von unten nach oben erfolgen. Vor dem ersten Schritt, zwischen den Schritten und/oder nach dem dritten Schritt können weitere Schritte durchgeführt werden. Weitere Schritte können umfassen: Bereitstellen der Kurzfasern und/oder des Matrixwerkstoffs; Zusammenführen der Kurzfasern und des fluiden Matrixwerkstoffs; Entnehmen von Kurzfaserverbundwerkstoff-Objekten; Nachbearbeiten von Kurzfaserverbundwerkstoff-Objekten.

Die Kurzfasern können organische Fasern, wie Aramidfasern, Kohlenstofffasern, Polyester-Fasern, Nylon-Fasern, Polyethylen-Fasern, Plexiglas-Fasern, anorganische Fasern, wie Basaltfasern, Borfasern, Glasfasern, Keramikfasern, Kieselsäurefasern, oder eine Mischung davon sein. Die Kurzfasern können eine durchschnittliche Länge von ca. 20µm bis ca. 2000µm, insbesondere von ca. 40µm bis ca. 300µm aufweisen. Die Kurzfasern können abgegrenzt sein von Langfasern und/oder Superkurzfasern. Der Matrixwerkstoff kann ein Kunststoff, Kunstharz, Photopolymer, Keramik, Metall oder eine Mischung davon sein.

Kurzfaserverbundwerkstoff-Objekte können mithilfe von Stereolithografie (SL), Laser-Sintern (LS), Laser-Strahlschmelzen (Laser Beam Melting = LBM), Elektronen-Strahlschmelzen (Electron Beam Melting = EBM), Multi-Jet Modelling (MJM), Poly-Jet Modelling (PJM), 3-D-Drucken (3DP, auch Binder Jetting), Layer Laminated Manufacturing (LLM), Digital Light Processing (DLP), Thermotransfer-Sintern (TTS) hergestellt werden.

Die Kurzfasern können schichtweise individuell orientiert werden. Die Kurzfaser jeder Schicht können individuell orientiert werden. Die Kurzfaser einer Schicht können gegenüber Kurzfasern anderer Schichten individuell orientiert werden.

Die Kurzfasern können schichtweise unidirektional orientiert werden. Die Kurzfasern können schichtweise entlang einer Hauptrichtung orientiert werden. Die Kurzfasern einer Schicht können unidirektional orientiert werden. Die Kurzfasern einer Schicht können entlang einer Hauptrichtung orientiert werden. Die Kurzfasern können schichtweise entlang vorgegebener Lastverläufe orientiert werden. Die Kurzfasern einer Schicht können entlang vorgegebener Lastverläufe orientiert werden. Die Kurzfasern können mechanisch, magnetisch, akustisch und/oder fluiddynamisch orientiert werden. Die Kurzfasern können mithilfe einer Kurzfaserausrichtungsvorrichtung orientiert werden.

Die Kurzfasern können nach dem Orientieren und/oder vor dem Konsolidieren des Matrixwerkstoffs kompaktiert werden. Die Kurzfasern können unter Wirkung einer vorgegebenen Anpresskraft kompaktiert werden. Die Kurzfasern können mithilfe einer Bauplattform kompaktiert werden. Die Kurzfasern können mithilfe einer Kompaktierungsplatte kompaktiert werden. Die Kurzfasern können unter Wirkung einer vorgegebenen Anpresskraft gehalten werden, bis der Matrixwerkstoff konsolidiert ist. Die Kurzfasern können kompaktiert werden, um einen Kurzfaservolumengehalt in den Kurzfaserverbundwerkstoff-Objekten zu erhöhen. Die Kurzfasern können kompaktiert werden, um Matrixmaterial auszupressen.

Der Matrixwerkstoff kann in einem physikalischen und/oder chemischen Härtungs- und/oder Schmelzprozess konsolidiert werden. Der Matrixwerkstoff kann in einem physikalischen und Sinterprozess konsolidiert werden. Der Matrixwerkstoff kann unter Einbringung von Energie konsolidiert werden. Der Matrixwerkstoff kann mithilfe eines Laserstrahls oder von UV-Licht konsolidiert werden. Mit "Konsolidieren" ist insbesondere ein Verfestigen, Verschmelzen, Härten oder Aushärten bezeichnet.

Die Vorrichtung kann eine Basis aufweisen. Die Vorrichtung kann eine Grundfläche aufweisen. Die Grundfläche kann an der Basis angeordnet sein. Die Grundfläche kann eben sein. Die Vorrichtung kann eine einzige Bauplattform aufweisen. Die Vorrichtung kann mehrere Bauplattformen aufweisen. Die wenigstens eine Bauplattform kann einen scheibenartigen Abschnitt aufweisen. Der scheibenartige Abschnitt kann eine kreisförmige oder polygonförmige, beispielsweise viereckige, Form aufweisen. Die wenigstens eine Bauplattform kann einen flanschartigen Abschnitt aufweisen. Die wenigstens eine Bauplattform kann eine Arbeitsfläche aufweisen. Die Arbeitsfläche kann eben sein. Die Arbeitsfläche kann mehrfach gekrümmt sein. Die Arbeitsfläche kann reliefartig geformt sein. Die Arbeitsfläche kann entsprechend einem herzustellenden Kurzfaserverbundwerkstoff-Objekt geformt sein. Die Grundfläche und die Arbeitsfläche können einander zugewandt sein. Die Grundfläche und die Arbeitsfläche können in dieselbe Richtung gewandt sein.

Die Vorrichtung kann wenigstens eine Kompaktierungsplatte aufweisen. Die Vorrichtung kann eine einzige Kompaktierungsplatte aufweisen. Die Vorrichtung kann mehrere Kompaktierungsplatten aufweisen. Die wenigstens eine Kompaktierungsplatten kann einen scheibenartigen Abschnitt aufweisen. Der scheibenartige Abschnitt kann eine kreisförmige oder polygonförmige, beispielsweise viereckige, Form aufweisen. Die wenigstens eine Kompaktierungsplatte kann einen flanschartigen Abschnitt aufweisen. Die wenigstens eine Kompaktierungsplatte kann eine Kompaktierungsfläche aufweisen. Die Kompaktierungsfläche kann eben sein. Die Kompaktierungsfläche kann mehrfach gekrümmt sein. Die Kompaktierungsfläche kann reliefartig geformt sein. Die Kompaktierungsfläche kann entsprechend einem herzustellenden Kurzfaserverbundwerkstoff-Objekt geformt sein. Die Grundfläche und die Kompaktierungsfläche können einander zugewandt sein. Die wenigstens eine Kompaktierungsplatte kann von der wenigstens einen Bauplattform strukturell gesondert sein. Die wenigstens eine Kompaktierungsplatte kann zumindest abschnittsweise für UV-Strahlung transparent sein. Die Kompaktierungsfläche kann beschichtet sein. Die Kompaktierungsfläche kann eine Antihaft-Beschichtung aufweisen. Die Kompaktierungsfläche kann mit einer Anti-Haftschicht beschichtet sein, um eine Anhaftung des polymerisierenden Photopolymers zu vermeiden.

Die Vorrichtung kann eine Führung für die wenigstens eine Bauplattform, eine Führung für die wenigstens eine Arbeitswanne und/oder eine Führung für die wenigstens eine Kompaktierungsplatte aufweisen. Die Führung kann an der Basis angeordnet sein. Die Führung kann eine Linearführung sein. Die Drehachse kann senkrecht zu der Grundfläche angeordnet sein. Der Grundfläche können eine x-Achse und eine y-Achse eines kartesischen Koordinatensystems zugeordnet sein. Der Drehachse eine z-Achse des Koordinatensystems zugeordnet sein.

Die wenigstens eine Bauplattform, die wenigstens eine Arbeitswanne und/oder die wenigstens eine Kompaktierungsplatte können/kann um die Drehachse drehbar sein, um einen vorgegebenen Drehwinkel der Arbeitsfläche und/oder der Kompaktierungsfläche bezüglich der Grundfläche einzustellen. Ein Drehwinkel kann mit einer vorgegebenen Mindestgenauigkeit einstellbar sein. Die wenigstens eine Bauplattform kann entlang der Drehachse verlagerbar sein, um Kurzfaserverbundwerkstoff-Objekte schichtweise aufzubauen. Die wenigstens eine Bauplattform, die wenigstens eine Arbeitswanne und/oder die wenigstens eine Kompaktierungsplatte können/kann entlang der Drehachse verlagerbar sein, um die Kurzfasern zu kompaktieren. Die wenigstens eine Bauplattform, die wenigstens eine Arbeitswanne und/oder die wenigstens eine Kompaktierungsplatte können/kann entlang der Drehachse verlagerbar sein, um einen vorgegebenen Anpressdruck zu erzeugen.

Die Vorrichtung kann eine Antriebsvorrichtung aufweisen. Die Antriebsvorrichtung kann dazu dienen, die wenigstens eine Bauplattform, die wenigstens eine Arbeitswanne und/oder die wenigstens eine Kompaktierungsplatte um die Drehachse zu drehen und/oder entlang der Drehachse zu verlagern. Die Antriebsvorrichtung kann einen Aktuator und/oder ein Getriebe aufweisen. Die Vorrichtung kann eine Kontrollvorrichtung aufweisen. Die Kontrollvorrichtung kann einen Prozessor, einen Arbeitsspeicher, einen Datenspeichern, eine Eingabevorrichtung, eine Ausgabevorrichtung und/oder Schnittstellen zur Datenübertragung aufweisen. Die Antriebsvorrichtung kann mithilfe der Kontrollvorrichtung kontrollierbar sein.

Die Vorrichtung kann eine einzige Arbeitswanne aufweisen. Die Vorrichtung kann mehrere Arbeitswannen aufweisen. Die wenigstens eine Arbeitswanne kann dazu dienen, Kurzfasern und einen fluiden Matrixwerkstoff aufzunehmen und/oder bereitzustellen. In der wenigstens einen Arbeitswanne kann ein fluider Matrixwerkstoff mit Kurzfasern umwälzbar sein. In der wenigstens einen Arbeitswanne kann ein fluider Matrixwerkstoff mit Kurzfasern umwälzbar sein, um eine Sedimentation von Kurzfasern zu gewährleisten. In der wenigstens einen Arbeitswanne können schichtweise Kurzfaserverbundwerkstoff-Objekte herstellbar sein. Die wenigstens eine Arbeitswanne kann eine mit der wenigstens einen Bauplattform korrespondierende Form aufweisen. Die wenigstens eine Arbeitswanne kann eine derartige Form aufweisen, die wenigstens eine Bauplattform und/oder die wenigstens eine Kompaktierungsplatte darin aufnehmbar ist. Die wenigstens eine Arbeitswanne kann eine derartige Form aufweisen, die mehrere Bauplattformen und/oder mehrere Kompaktierungsplatten darin aufnehmbar sind. Die wenigstens eine Arbeitswanne kann einen Bodenabschnitt und einen Wandabschnitt aufweisen. Die wenigstens eine Arbeitswanne kann zumindest abschnittsweise transparent sein. Die wenigstens eine Arbeitswanne kann zumindest abschnittsweise für UV-Strahlung transparent sein. Die wenigstens eine Arbeitswanne kann einen Bodenabschnitt und einen Wandabschnitt aufweisen. Der Bodenabschnitt kann, insbesondere für UV-Strahlung, transparent sein.

Die Vorrichtung kann wenigstens eine Kurzfaserausrichtvorrichtung aufweisen. Mithilfe der wenigstens einen Kurzfaserausrichtvorrichtung können Kurzfasern in fluidem Matrixwerkstoff mechanisch ausrichtbar sein. Mithilfe der wenigstens einen Kurzfaserausrichtvorrichtung kann in einer Schicht aus Kurzfasern und fluidem Matrixwerkstoff eine Scherwirkung erzeugbar sein. Die wenigstens eine Kurzfaserausrichtvorrichtung kann rakelartig ausgeführt sein. Die wenigstens eine Kurzfaserausrichtvorrichtung kann eine Rakel aufweisen. Die Rakel kann in der wenigstens einen Arbeitswanne wirksam sein. Die wenigstens eine Kurzfaserausrichtvorrichtung kann einen Antrieb aufweisen. Der Antrieb kann einen Motor aufweisen. Der Motor kann als elektrischer Schrittmotor ausgeführt sein. Der Motor kann als Rotationsmotor oder als Linearmotor ausgeführt sein. Der Antrieb kann ein Getriebe aufweisen. Das Getriebe kann zum Wandeln einer rotatorischen Bewegung in eine lineare Bewegung dienen. Das Getriebe kann eine Zahnstange aufweisen. Der Antrieb der wenigstens einen Kurzfaserausrichtvorrichtung kann mithilfe der Kontrollvorrichtung kontrollierbar sein. Der Antrieb kann zum Antreiben der Rakel dienen. Die wenigstens eine Kurzfaserausrichtvorrichtung kann der wenigstens eine Arbeitswanne zugeordnet sein. Wenn die wenigstens eine Arbeitswanne drehbar und/oder verlagerbar ist, kann die wenigstens eine Kurzfaserausrichtvorrichtung zusammen mit der wenigstens einen Arbeitswanne drehbar und/oder verlagerbar sein.

Die Vorrichtung wenigstens eine Matrixkonsolidierungsvorrichtung aufweist. Die Matrixkonsolidierungsvorrichtung kann wenigstens eine Strahlungsquelle aufweisen. Die Matrixkonsolidierungsvorrichtung kann wenigstens eine UV-Strahlungsquelle aufweisen. Die Matrixkonsolidierungsvorrichtung kann wenigstens einen Laser aufweisen. Die Matrixkonsolidierungsvorrichtung kann wenigstens eine Optikvorrichtung aufweisen. Die Optikvorrichtung kann dazu dienen, Strahlen zu lenken und/oder zu fokussieren.

Das Kurzfaserverbundwerkstoff-Objekt kann in einen Matrixwerkstoff eingebettete Kurzfasern aufweisen. Das Kurzfaserverbundwerkstoff-Objekt kann schichtweise aufgebaut sein. Die Kurzfasern können schichtweise individuell orientiert sein. Die Kurzfasern können schichtweise unidirektional orientiert sein. Das Kurzfaserverbundwerkstoff-Objekt kann ein automobiltechnisches Objekt oder ein prothetisches Objekt sein. Das Kurzfaserverbundwerkstoff-Objekt kann ein Modell, Muster, Prototyp, Werkzeug oder Endprodukt sein. Das Kurzfaserverbundwerkstoff-Objekt kann ein Leichtbauteil sein.

Zusammenfassend und mit anderen Worten dargestellt ergibt sich somit durch die Erfindung unter anderem eine stereolithografische Herstellung eines Kurzfaser-Laminataufbaus mittels unidirektionaler Faserausrichtung und rotierender Bauplattform.

Ein schichtweise aufgebautes Kurzfaserverbundmaterial kann automatisiert hergestellt werden. Hierzu können während einer Fertigung mit einer Stereolithografie-Anlage Kurzfasern innerhalb eines photoreaktiven Harzes entlang einer Hauptrichtung orientiert und anschließend mithilfe einer Bauplattform verpresst werden. Die Bauplattform kann drehbar ausgeführt sein, wodurch sich ein Laminat mit unterschiedlichen Orientierungsrichtungen in den Einzelschichten realisieren lässt. Dies ermöglicht eine schnelle und automatisierte Herstellung eines komplexen, faserverstärkten Bauteils mit Anpassung auf spätere Lastfälle. Hierdurch können Bauteile mit guten mechanischen Eigenschaften bei gleichzeitig hervorragender Oberflächengüte additiv hergestellt und als Endkundenbauteil eingesetzt werden.

Als Grundlage des neuen Fertigungsverfahrens kann eine schichtweise, stereolithografische Bauteilfertigung mit Hilfe von Flächenbelichtungsverfahren dienen. Hierbei können sowohl Digital Light Processing (DLP), Flüssigkristallanzeigen (LCD) oder andere Lichtquellen für die flächige Belichtung verwendet werden. Hierbei kann ein photoreaktives Harzsystem mit einer bestimmten Wellenlänge belichtet werden, um somit eine lokale Polymerisation hervorzurufen. Dies kann Schicht für Schicht erfolgen, wodurch ein komplexes, dreidimensionales Objekt erzeugt werden kann. Wenn die Belichtung innerhalb einer Schicht simultan erfolgt, hat eine Anzahl zu fertigender Objekte keinen Einfluss auf die Fertigungsdauer. Maßgeblich ist dann lediglich eine maximale Bauteilhöhe. Mithilfe der Stereolithografie kann aufgrund einer geringen Pixelgröße von Belichtungsquellen in einem additiven Fertigungsverfahren eine besonders hohe Genauigkeit erreicht werden. Vorliegend kann ein derartiges Verfahren genutzt werden, um durch gezielte Einbringung von Kurzfasern währen des Bauprozesses das Bauteil zu verstärken.

Mit der Erfindung können Kurzfaserverbundwerkstoff-Objekte additiv hergestellt und gleichzeitig deren mechanische Eigenschaften und Oberflächengüte optimiert werden. Eine Herstellung ist skalierbar. Kurzfaserverbundwerkstoff-Objekte können individualisiert hergestellt werden. Eine Wirtschaftlichkeit kann erhöht werden.

Nachfolgend werden Ausführungsbeispiele der Erfindung unter Bezugnahme auf Figuren näher beschrieben, dabei zeigen schematisch und beispielhaft:
- Fig. 1: eine Vorrichtung zum additiven Herstellen von Kurzfaserverbundwerkstoff-Objekten mit einer drehbaren und axial verlagerbaren Bauplattform,
- Fig. 2: ein Zentrieren einer Bauplattform zu einer Grundfläche,
- Fig. 3: ein additives Herstellen eines Kurzfaserverbundwerkstoff-Objekt mit schichtweise mechanisch individuell unidirektional orientierten Kurzfasern,
- Fig. 4: ein magnetisches Orientieren von Kurzfasern,
- Fig. 5: eine Arbeitswanne mit einer drehbaren und axial verlagerbaren Bauplattform und einer Kompaktierungsplatte zum additiven Herstellen von Kurzfaserverbundwerkstoff-Objekten,
- Fig. 6: Schichten von individuell unidirektional orientierten Kurzfasern,
- Fig. 7: Packungen von Kurzfasern zur Erhöhung eines Kurzfaservolumengehalts,
- Fig. 8: eine Vorrichtung zum Drehen und Verlagern einer Bauplattform zum additiven Herstellen von Kurzfaserverbundwerkstoff-Objekten,
- Fig. 9: eine Kurzfaserausrichtvorrichtung mit einer Rakel und einem Antrieb und
- Fig. 10: eine drehbare Arbeitswannenanordnung und eine Kurzfaserausrichtvorrichtung mit einer Rakel und einem Antrieb.

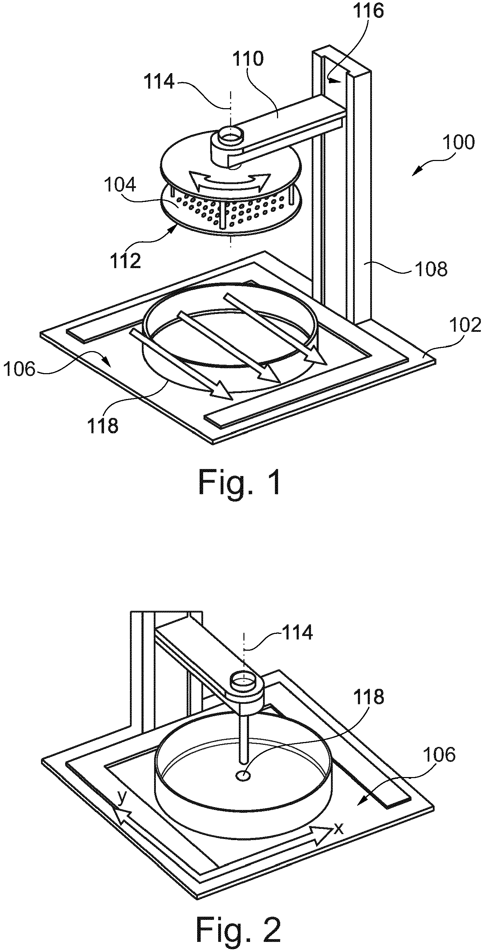

Fig. 1 zeigt eine Vorrichtung 100 zum additiven Herstellen von Kurzfaserverbundwerkstoff-Objekten. Die Vorrichtung 100 weist eine Basis 102 und eine kreisscheibenförmige Bauplattform 104 auf. Die Basis 102 weist eine nach oben gerichtete ebene Grundfläche 106 auf. An der Basis 102 ist senkrecht zur Grundfläche 106 eine Stütze 108 angeordnet. An der Stütze 108 ist ein Träger 110 angeordnet. Die Bauplattform 104 ist an dem Träger 110 angeordnet. Die Bauplattform 104 weist eine nach unten gerichtete Arbeitsfläche 112 auf. Die Grundfläche 106 und die Arbeitsfläche 112 sind zueinander parallel angeordnet und einander entgegen gerichtet. Die Bauplattform 104 ist, wie mithilfe eines Doppelpfeils symbolisiert, um eine zur Grundfläche 106 und zur Arbeitsfläche 112 senkrechte Drehachse 114 relativ zu der Basis 102 drehbar. Die Stütze 108 weist eine Linearführung 116 auf, an der der Träger 110 geführt ist. Damit ist die Bauplattform 104 entlang der Drehachse 114 relativ zu der Basis 102 verlagerbar. An der Grundfläche 106 ist basisfest eine Arbeitswanne 118 angeordnet, in der die Bauplattform 104 aufnehmbar ist. Die Arbeitswanne 118 weist vorliegend einen für UV-Strahlung transparenten Bodenabschnitt und einen Wandabschnitt auf.

Fig. 2 zeigt ein Zentrieren der Bauplattform 104 zur Grundfläche 106. Der Grundfläche 106 ist ein kartesisches Koordinatensystem mit einer x-Achse und eine y-Achse zugeordnet. Die Drehachse 114 erstreckt sich senkrecht zu einer durch die x-Achse und die y-Achse aufgespannten Ebene und wird mit einem Punkt 120 dieser Ebene in Übereinstimmung gebracht. Hierdurch wird vermieden, dass bei Kurzfaserverbundwerkstoff-Objekten 122 mit unterschiedlichen Ausdehnungen in Erstreckungsrichtung der x-Achse und der y-Achse ein Versatz zwischen Schichten nach einem Verdrehen der Bauplattform 104 entsteht. Dies ist erforderlich, da ein Belichtungsmuster entsprechend einem Verdrehen der Bauplattform 104 mitgedreht werden muss.

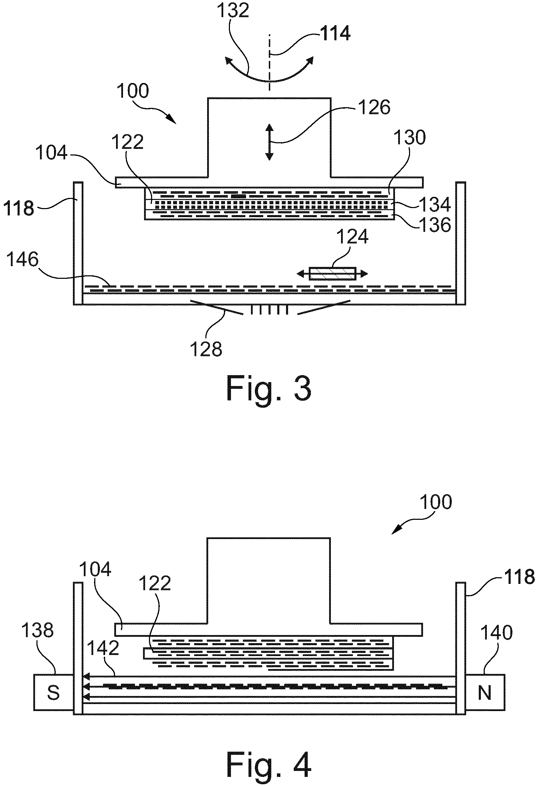

Nachfolgend kann, wie in Fig. 3 gezeigt, ein Kurzfaserverbundwerkstoff-Objekt 122 hergestellt werden. Dazu werden zunächst am Bodenabschnitt der Arbeitswanne 118 Kurzfasern, beispielsweise Kohlenstoffkurzfasern, in einem fluiden Matrixwerkstoff, vorliegend einem photoreaktiven Harzsystem, bereitgestellt und mithilfe einer Kurzfaserausrichtvorrichtung 124 beispielsweise mechanisch entlang einer Hauptrichtung unidirektional orientiert. In Fig. 1 ist die unidirektionale Kurzfaserorientierung in der Arbeitswanne 118 mithilfe von Pfeilen symbolisiert. Wichtig ist, dass die Kurzfasern schnell und mit großem Gewichtsanteil orientiert werden. Ein Vorteil dieses Vorgehens liegt einerseits darin, dass das Verfahren zunächst unabhängig von den verwendeten Kurzfasern ist und somit jegliche Kurzfasertyp verarbeitet werden kann. Die Kurzfasern werden nur entlang einer Hauptrichtung orientiert, was einen schnellen Fertigungsprozess beispielsweise im DLP-Prozess erlaubt. Die Richtung wird innerhalb der Arbeitswanne 118 immer gleich ausgeführt, die Orientierung erfolgt durch Verdrehen der Bauplattform 104. Es muss entsprechend nur die Art der Ausrichtung angepasst werden, die restlichen Komponenten können identisch bleiben. Wird eine kleine Kurzfaserlänge, beispielsweise <1mm gewählt, kann ein Nachbehandlungsschritt von Oberflächen zur Abtrennung überstehender Kurzfasern entfallen. Eine Oberfläche des gedruckten Kurzfaserverbundwerkstoff-Objekts 122 erscheint dann etwas weicher und ein Stufeneffekt wird reduziert, was zur Steigerung der Oberflächengüte beiträgt.

Nachfolgend wird die Bauplattform 104 in Pfeilrichtung 126 abgesenkt, um die Kurzfasern zu kompaktieren und überschüssiges Matrixmaterial auszupressen. Nachfolgend wird der Matrixwerkstoff mithilfe einer Matrixkonsolidierungsvorrichtung, die vorliegend eine UV-Strahlungsquelle aufweist, durch den transparenten Bodenabschnitt hindurch mit UV-Strahlung 128 beaufschlagt und somit verfestigt, um in einer Druckebene an der Bauplattform 104 eine erste Schicht 130 des Kurzfaserverbundwerkstoff-Objekts 122 zu erzeugen. Dabei kann ein Anpressdruck durch die Bauplattform 104 aufrechterhalten werden.

Nachfolgend wird die Bauplattform 104 in Pfeilrichtung 126 angehoben, wobei das Kurzfaserverbundwerkstoff-Objekts 122 von der Arbeitswanne 118 separiert wird, und die Bauplattform 104 wird um einen vorgegebenen Drehwinkel in Pfeilrichtung 132 verdreht, um eine individuelle Kurzfaserorientierung der folgenden Schicht zu erreichen, während am Bodenabschnitt der Arbeitswanne 118 erneut Kurzfasern in einem fluiden Matrixwerkstoff bereitgestellt und mithilfe der Kurzfaserausrichtvorrichtung 124 unidirektional orientiert werden. Nachfolgend wird die Bauplattform 104 erneut in Pfeilrichtung 126 abgesenkt, um die Kurzfasern zu kompaktieren und überschüssiges Matrixmaterial auszupressen. Nachfolgend wird der Matrixwerkstoff mithilfe der Matrixkonsolidierungsvorrichtung mit UV-Strahlung 128 beaufschlagt und somit verfestigt, um in der Druckebene an der ersten Schicht 130 eine zweite Schicht 134 des Kurzfaserverbundwerkstoff-Objekts 122 mit individuell orientierten Kurzfasern zu erzeugen.

Dieser Ablauf wird wiederholt, um eine dritte Schicht 136 und weitere Schichten des Kurzfaserverbundwerkstoff-Objekts 122 zu erzeugen. Jeder der Schichten 130, 134, 136 weist eine individuelle Kurzfaserorientierung auf. Das Kurzfaserverbundwerkstoff-Objekt 122 ist laminatartig aufgebaut.

Die Orientierung der Kurzfasern in den einzelnen Schichten 130, 134, 136 ist den späteren Belastungsrichtungen des Kurzfaserverbundwerkstoff-Objekts 122 angepasst, es kann aber auch ein quasiisotroper Lagenaufbau ohne Vorzugsrichtung erzeugt werden.

Fig. 4 zeigt ein magnetisches Orientieren von Kurzfasern. Die Kurzfaserausrichtvorrichtung weist in diesem Fall Magnete 138, 140 auf, zwischen denen ein Magnetfeld 142 etabliert werden kann, und kann außenseitig der Arbeitswanne 118 angeordnet sein. Das Magnetfeld 142 wirkt auf die Kurzfasern, sodass sich diese entsprechend unidirektional ausrichten. Im Übrigen wird ergänzend insbesondere auf Fig. 3 und die zugehörige Beschreibung verwiesen.

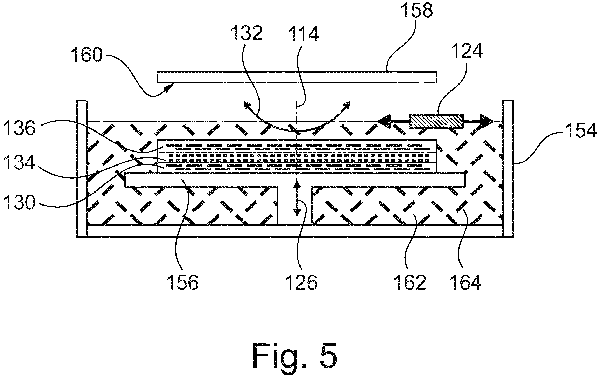

Fig. 5 zeigt eine Arbeitswanne 154 mit einer Bauplattform 156 und einer Kompaktierungsplatte 158 zum additiven Herstellen von Kurzfaserverbundwerkstoff-Objekten. Die Bauplattform 156 ist, wie mithilfe eines Doppelpfeils 132 symbolisiert, um eine senkrechte Drehachse 114 relativ zu einer Grundfläche drehbar und entlang der Drehachse 114 relativ zur Grundfläche verlagerbar. Eine Kurzfaserausrichtvorrichtung 124 ist mit 124 bezeichnet. Die Kompaktierungsplatte 158 weist eine der Grundfläche zugewandte Kompaktierungsfläche 160 auf. In der Arbeitswanne 154 ist ein fluider Matrixwerkstoff 162 mit Kurzfasern 164 umwälzbar, um eine Sedimentation von Kurzfasern 164 zum Erzeugen von Schichten 130, 134, 136 zu gewährleisten. Im Übrigen wird ergänzend insbesondere auf Fig. 1 bis Fig. 4 und die zugehörige Beschreibung verwiesen.

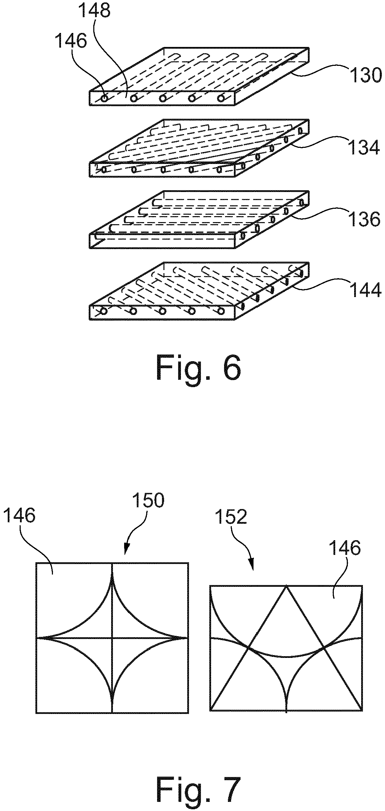

Fig. 6 zeigt Schichten 130, 134, 136, 144 von individuell unidirektional orientierten Kurzfasern, wie 146. Die Kurzfasern 146 einer Schicht sind jeweils unidirektional ausgerichtet. Die Kurzfasern 146 unterschiedlicher Schichten 130, 134, 136, 144 sind jeweils individuell orientiert. Die Kurzfasern 146 sind jeweils im Matrixwerkstoff 148 eingebettet.

Fig. 7 zeigt Packungen von Kurzfasern 146 zur Erhöhung eines Kurzfaservolumengehalts des Kurzfaserverbundwerkstoff-Objekts 122. Die orientierten Kurzfasern 146 werden mithilfe der Bauplattform 104 verpresst, um eine Kompaktierung der Kurzfasern 146 innerhalb einer Druckschicht zu erzeugen. Dabei kann sowohl eine quadratische Packung 150 mit einem maximal möglichen Kurzfaservolumengehalt von φ_max=π/4≈0,79 bzw. im besten Fall eine hexagonale Packung 152 mit φ_max=π/√12≈0,91 theoretisch erreicht werden. Dies ist, im Gegensatz zur zufälligen Kurzfaserverteilung, unabhängig von der gewählten Kurzfaserlänge und ermöglicht somit eine deutliche Steigerung der mechanischen Eigenschaften.

Das Verfahren kann für alle Kurzfaserverbundwerkstoff-Objekte 122 verwendet werden, welche aktuell schon mithilfe additiver Fertigungsverfahren für Kunststoffe hergestellt werden und strengere Anforderungen an die Belastbarkeit und Einsatzbereiche haben. So kann dieses Verfahren beispielsweise dazu dienen, eine aktuell vorhandenen Materiallücke für die Individualisierung von Automobilkomponenten (Interieur und Exterieurbauteile) aufgrund mangelnder Temperatur- und Bauteilstabilitäten zu schließen.

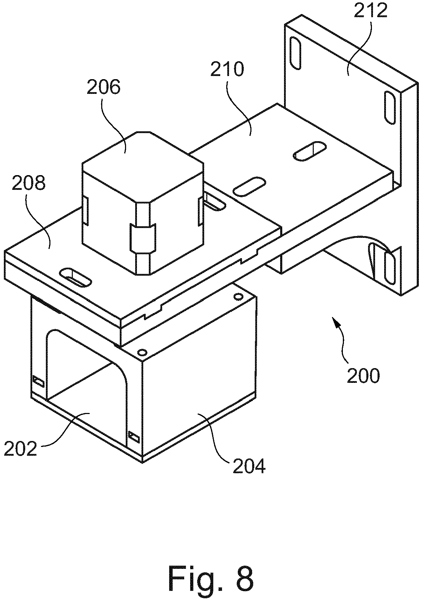

Fig. 8 zeigt eine Vorrichtung 200 zum Drehen und Verlagern einer Bauplattform 202 zum additiven Herstellen von Kurzfaserverbundwerkstoff-Objekten. Die Vorrichtung 200 weist einen Bauplattformhalter 204, einen Drehantrieb 206, einen x-Schlitten 208, einen y-Schlitten 210 und einen z-Schlitten 212 auf. Mithilfe des Drehantriebs 208 ist der Bauplattformhalter 204 mit der Bauplattform 202 drehbar. Mithilfe des x-Schlittens 208, des y-Schlittens 210 und des z-Schlittens 212 ist der Bauplattformhalter 204 mit der Bauplattform 202 in einem kartesischen Koordinatensystem in einer x-Richtung, einer y-Richtung und einer z-Richtung verlagerbar. Die Vorrichtung 200 dient zur Verwendung mit einer drehfesten und verlagerungsfesten Arbeitswanne. Im Übrigen wird ergänzend insbesondere auf Fig. 1 bis Fig. 7 und die zugehörige Beschreibung verwiesen.

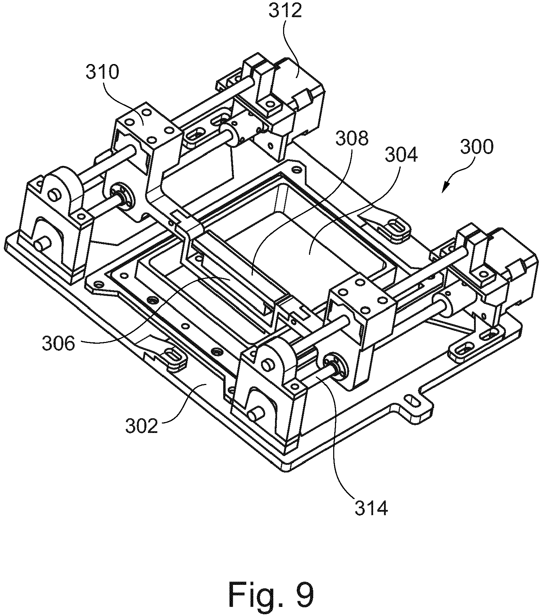

Fig. 9 zeigt eine Kurzfaserausrichtvorrichtung 300 mit einer rahmenartigen Basis 302, einer Arbeitswanne 304, einer Rakel 306, einem Dach 308, einem Rakelhalter 310 und einem Antrieb. Der Antrieb weist elektrische Motore, wie 312, und Getriebe mit Trapezgewindespindel, wie 314, auf. Die Rakel 306 ist an dem Rakelhalter 310 angeordnet, mit dem Dach 308 abgedeckt und mithilfe des Antriebs linear verlagerbar. Die Arbeitswanne 304 ist drehfest und verlagerungsfest an Basis 302 angeordnet. Die Kurzfaserausrichtvorrichtung 300 mit der Arbeitswanne 304 dient zur Verwendung mit einer drehbaren und verlagerbaren Bauplattform, wie Bauplattform 104 gemäß Fig. 1, Fig, 3 und Fig. 4 oder mit einer Bauplattform 202 gemäß Fig. 8. Im Übrigen wird ergänzend insbesondere auf Fig. 1 bis Fig. 7 und die zugehörige Beschreibung verwiesen.

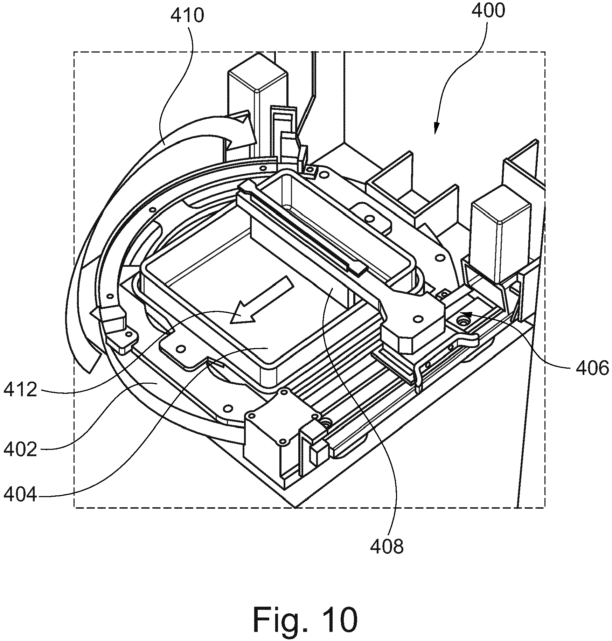

Fig. 10 zeigt eine drehbare Arbeitswannenanordnung 400 mit einer drehbaren Basis 402, einer Arbeitswanne 404 und einer Kurzfaserausrichtvorrichtung 406 mit einer Rakel 408. Die Arbeitswanne 404 und die Kurzfaserausrichtvorrichtung 406 sind basisfest angeordnet und mit der Basis 402 drehbar, wie mit dem Pfeil 410 symbolisiert. Die Rakel 408 ist linear verlagerbar, wie mit dem Pfeil 412 symbolisiert. Die Arbeitswannenanordnung 400 dient zur Verwendung mit einer drehfesten Bauplattform. Im Übrigen wird ergänzend insbesondere auf Fig. 1 bis Fig. 7 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Vorrichtung
- 102: Basis
- 104: Bauplattform
- 106: Grundfläche
- 108: Stütze
- 110: Träger
- 112: Arbeitsfläche
- 114: Drehachse
- 116: Linearführung
- 118: Arbeitswanne
- 120: Punkt
- 122: Kurzfaserverbundwerkstoff-Objekt
- 124: Kurzfaserausrichtvorrichtung
- 126: Pfeilrichtung
- 128: UV-Strahlung
- 130: erste Schicht
- 132: Pfeilrichtung
- 134: zweite Schicht
- 136: dritte Schicht
- 138: Magnet
- 140: Magnet
- 142: Magnetfeld
- 144: Schicht
- 146: Kurzfasern
- 148: Matrixwerkstoff
- 150: quadratische Packung
- 152: hexagonale Packung
- 154: Arbeitswanne
- 156: Bauplattform
- 158: Kompaktierungsplatte
- 160: Kompaktierungsfläche
- 162: Matrixwerkstoff
- 164: Kurzfasern

- 200: Vorrichtung
- 202: Bauplattform
- 204: Bauplattformhalter
- 206: Drehantrieb
- 208: x-Schlitten
- 210: y-Schlitten
- 212: z-Schlitten

- 300: Kurzfaserausrichtvorrichtung
- 302: Basis
- 304: Arbeitswanne
- 306: Rakel
- 308: Dach
- 310: Rakelhalter
- 312: Motor
- 314: Trapezgewindespindel

- 400: Arbeitswannenanordnung
- 402: Basis
- 404: Arbeitswanne
- 406: Kurzfaserausrichtvorrichtung
- 408: Rakel
- 410: Pfeil
- 412: Pfeil

## Patentansprüche

1. Verfahren zum additiven Herstellen von Kurzfaserverbundwerkstoff-Objekten (122), **dadurch gekennzeichnet, dass** schichtweise innerhalb eines fluiden Matrixwerkstoffs (148) zunächst ungerichtet vorliegende Kurzfasern (146) orientiert werden und der Matrixwerkstoff (148) konsolidiert wird.

2. Verfahren nach Anspruch 1, **dadurch gekennzeichnet, dass** die Kurzfasern (146) nach dem Orientieren und/oder vor dem Konsolidieren des Matrixwerkstoffs (148) kompaktiert werden.

3. Verfahren nach wenigstens einem der Ansprüche 1 bis 2, **dadurch gekennzeichnet, dass** die Kurzfasern (146) schichtweise individuell orientiert werden.

4. Verfahren nach wenigstens einem der Ansprüche 1 bis 3, **dadurch gekennzeichnet, dass** die Kurzfasern (146) schichtweise unidirektional orientiert werden.

5. Verfahren nach wenigstens einem der Ansprüche 1 bis 4, **dadurch gekennzeichnet, dass** die Kurzfasern (146) mechanisch, magnetisch, akustisch und/oder fluiddynamisch orientiert werden.

6. Verfahren nach wenigstens einem der Ansprüche 1 bis 5, **dadurch gekennzeichnet, dass** die Kurzfasern (146) unter Wirkung einer vorgegebenen Anpresskraft kompaktiert werden.

7. Verfahren nach wenigstens einem der Ansprüche 1 bis 6, **dadurch gekennzeichnet, dass** der Matrixwerkstoff (148) in einem physikalischen und/oder chemischen Härtungs- und/oder Schmelzprozess konsolidiert wird.

8. Verfahren nach wenigstens einem der Ansprüche 1 bis 7, **dadurch gekennzeichnet, dass** ein Schichtaufbau von oben nach unten erfolgt.

9. Vorrichtung (100) zum Durchführen eines Verfahrens nach wenigstens einem der Ansprüche 1 bis 8, **dadurch gekennzeichnet, dass** die Vorrichtung (100) wenigstens eine Bauplattform (104, 202) und wenigstens eine Arbeitswanne (118, 304, 404) aufweist, wobei die wenigstens eine Bauplattform (104, 202) und die wenigstens eine Arbeitswanne (118, 304, 404) um eine Drehachse (114) relativ zueinander drehbar und entlang der Drehachse (114) relativ zueinander verlagerbar sind.

10. Vorrichtung (100) nach Anspruch 9, **dadurch gekennzeichnet, dass** die wenigstens eine Bauplattform (104, 202) drehbar und die wenigstens eine Arbeitswanne (118, 304) drehfest oder die wenigstens eine Bauplattform drehfest und die wenigstens eine Arbeitswanne (404) drehbar angeordnet ist.

11. Vorrichtung (100) nach wenigstens einem der Ansprüche 9 bis 10, **dadurch gekennzeichnet, dass** die wenigstens eine Bauplattform (104, 202) verlagerbar und die wenigstens eine Arbeitswanne (118) verlagerungsfest oder die wenigstens eine Bauplattform verlagerungsfest und die wenigstens eine Arbeitswanne verlagerbar angeordnet ist.

12. Vorrichtung (100) nach wenigstens einem der Ansprüche 9 bis 11, **dadurch gekennzeichnet, dass** wenigstens eine Arbeitswanne (118, 304, 404) zumindest abschnittsweise transparent ist.

13. Vorrichtung (100) nach wenigstens einem der Ansprüche 9 bis 12, **dadurch gekennzeichnet, dass** die Vorrichtung (100) wenigstens eine Kurzfaserausrichtvorrichtung (124, 300, 406) aufweist.

14. Vorrichtung (100) nach wenigstens einem der Ansprüche 9 bis 13, **dadurch gekennzeichnet, dass** die Vorrichtung (100) wenigstens eine Matrixkonsolidierungsvorrichtung aufweist.

15. Kurzfaserverbundwerkstoff-Objekt (122), **dadurch gekennzeichnet, dass** das Kurzfaserverbundwerkstoff-Objekt (122) gemäß einem Verfahren nach wenigstens einem der Ansprüche 1 bis 8 und/oder mithilfe einer Vorrichtung (100) nach wenigstens einem der Ansprüche 9 bis 14 hergestellt ist.

16. Kurzfaserverbundwerkstoff-Objekt (122) nach Anspruch 15, **dadurch gekennzeichnet, dass** das Kurzfaserverbundwerkstoff-Objekt (122) ein automobiltechnisches Objekt oder ein prothetisches Objekt ist.
